# EUROPÄISCHE PATENTANMELDUNG

(11) **EP 2 987 837 A1**
(43) Veröffentlichungstag der Anmeldung: **24.02.2016**
(21) Anmeldenummer: 14181556.3
(22) Anmeldetag: 20.08.2014
(51) Int. Cl.: C09D 4/06, C09D 133/06

(54) **Reaktionsharzversiegelung für verschmutzungsarme Kaltplastikmarkierungen**

(71) Anmelder: Evonik Röhm GmbH, 64293 Darmstadt (DE)
(72) Erfinder: Klein, Dr. Alexander, 55435 Gau-Algesheim (DE); Debes, Ralf, 63829 Krombach (DE); Schmidt, Oliver, 63579 Freigericht (DE); Reinhard, Peter, 63303 Dreieich-Dreieichenhain (DE)

(57) **Zusammenfassung**

Die vorliegende Erfindung umfasst eine neuartige schmutzabweisende Reaktionsharzversiegelung für Markierungen oder Beschichtung von Bodenflächen bzw. Fahrbahnen, wie beispielsweise Straßen, auf Kaltplastikbasis. Diese Versiegelung führt gegenüber etablierten Systemen des Standes der Technik zu einer verringerten Anhaftung von Schmutz, insbesondere in heißen und/oder trockenen, staubigen Umgebungen. Damit bleibt die Markierung auch in trockenen, heißen Regionen besser sichtbar als herkömmliche Markierungen. Ansonsten verfügt die erfindungsgemäß versiegelte Markierung über gegenüber dem Stand der Technik vergleichbare mechanische Eigenschaften.

## Beschreibung

Die vorliegende Erfindung umfasst eine neuartige schmutzabweisende Reaktionsharzversiegelung für Markierungen oder Beschichtung von Bodenflächen bzw. Fahrbahnen, wie beispielsweise Straßen, auf Kaltplastikbasis. Diese Versiegelung führt gegenüber etablierten Systemen des Standes der Technik zu einer verringerten Anhaftung von Schmutz, insbesondere in heißen und/oder trockenen, staubigen Umgebungen. Damit bleibt die Markierung auch in trockenen, heißen Regionen besser sichtbar als herkömmliche Markierungen. Ansonsten verfügt die erfindungsgemäß versiegelte Markierung über gegenüber dem Stand der Technik vergleichbare mechanische Eigenschaften.

An moderne Straßen- bzw. Fahrbahnmarkierungen wird eine Reihe von Ansprüchen gestellt. Zum einen wird von solchen Systemen erwartet, dass sie eine einfache Auftragbarkeit auf der Straßenoberfläche und gleichzeitig hohe Lagerstabilität, sowie eine lange Lebensdauer der Markierung mit sich bringen. Auch von Bedeutung sind eine schnelle Verarbeitbarkeit und insbesondere eine Verarbeitbarkeit in einem möglichst breiten Temperaturfenster. Dies gilt insbesondere auch für Straßenmarkierungen in Regionen, in denen ein sehr trockenes, heißes Klima mit hohem Staub- oder Sandanteil in der Luft vorliegt.

In heißem Klima mit lang anhaltender Trockenheit kommt es zu einer starken anhaftenden Verschmutzung der Fahrbahnmarkierungen. Es handelt sich vor allem um Asphaltbindemittelbestandteile, die bei hoher Temperatur von Reifen von der Straßendecke auf die Markierung verschleppt werden. Dieser klebrige Schmutz wird bei hohen Temperaturen durch den Reifendruck insbesondere bei Markierungsstoffen mit thermoplastischem Charakter in den Markierungsstoff selbst eingetragen, bzw. in die Poren der Markierungsoberfläche eingetragen. Nach längerer Trockenheit kann diese eingetragene Verschmutzung selbst durch wiederkehrenden Regen nicht mehr abgewaschen werden.
Die Funktionalität, d. h. Sichtbarkeit der Markierung und die Sicherheit der Verkehrsteilnehmer wird durch diese Verschmutzung dauerhaft stark beeinträchtigt.

### Stand der Technik

Kaltplastikmassen für (Multikomponenten-) Kaltplastikmarkierungen sind i.A. Mischungen aus Reaktionsharzen, bzw. Bindemitteln auf Reaktionsharzbasis, Pigmenten, Additiven und Füllstoffen, die unmittelbar vor der Verarbeitung mit einer Härterkomponente vermischt werden, wobei die Mischung aus Kaltplastikmasse und Härter auf der Straßendecke manuell oder maschinell ausgegossen oder auf dieser aufgespritzt wird. Als Reaktionsharzbindemittel für Kaltplastiken werden Lösungen von Polymeren (vorzugsweise (Meth)acrylatpolymeren) in (Meth)acrylatmonomeren eingesetzt.

Die Formulierungen Poly(meth)acrylate umfasst im Rahmen dieser Schrift sowohl Polymethacrylate wie auch Polyacrylate sowie Copolymere oder Mischungen aus beiden. Die Formulierung (Meth)acrylate umfasst entsprechend Methacrylate, Acrylate oder Mischungen aus beiden.

Die ausgehärteten Kaltplastikmarkierungen müssen eine hinreichende Flexibilität aufweisen um ausreichend spannungsarme Verbindung zu Asphaltstraßendecken etwa bei Temperaturschwankungen, wie sie zwischen Tag und Nacht oder zwischen Schatten oder hoher Sonneneinstrahlung auftreten, zu gewährleisten und der dynamischen Belastung durch den überrollenden Verkehr dauerhaft widerstehen zu können. Diese Flexibilität wird i. d. R. durch Weichsegmente im Reaktionsharzbindemittel, d.h. unter Copolymerisation von "weichen" Monomeren wie Butylmethacrylat, Butylacrylat, Ethylhexylacrylat, was eine niedrige Glasübergangstemperatur der Kaltplastikbindemittel bedingt. Die Oberfläche des ausgehärteten Kaltplastikmaterials weist aufgrund des verarbeitungsbedingt erforderlichen pastösen Charakters eine gewisse Porosität auf.

Als Fahrbahnmarkierungsmaterialien werden zurzeit Systeme wie Lösungsmittel basierte Farben, Wasserfarben, thermoplastische Markierungsmassen, Markierungsmassen auf Basis von Reaktionsharzen sowie vorgefertigte Klebebänder eingesetzt. Letztere haben den Nachteil, dass sie aufwendig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit GlasperlenDarüber hinaus neigen alle diese Systeme, d. h. Markierungen auf Lösemittel- oder Wasserbasis, sowie thermoplastische Systeme oder Reaktionsharz-gebundene Mehrkomponentensysteme, die beispielsweise als Kaltplastik applizierbar sind, dazu in einer heißen, staubigen Umgebung in einem hohen Maße Partikel an der Oberfläche aufzunehmen. Diese Verschmutzung ist zum einen oft irreversibel, d. h. wird auch durch Wasser bzw. Regen nicht wieder entfernt und führt dazu, dass die Markierungen als solche nur noch schlecht oder gar nicht mehr zu erkennen sind.

Lösungsmittel- und wasserbasierende Systeme, sowie Thermoplastiksysteme, sind deutlich weniger verschließfest und sind damit weniger dauerhaft als Kaltplastiksysteme. Kaltplastiksysteme verschleißen auch bei hohen Umgebungstemperaturen auf vielbefahrene Straßen mit hoher Verkehrsbeanspruchung der Markierung durch häufige Radüberrollung nur in vergleichbar sehr geringem Ausmaß. Allerdings verschmutzen dabei die hochwertigen Kaltplastiksysteme des Standes der Technik ähnlich schnell wie z.B. Thermoplastiksysteme bei anhaltend trockenem und heißen Klima durch die Bitumenverschleppung und hieran anhaftenden Schmutz.

Ein etabliertes System zur Markierung von Straßen bzw. zur Bodenbeschichtung sind so genannte Reaktionsharze. Dabei handelt es sich in der Regel um 2-K-Systeme, die Monomere, Polymere und weitere Komponenten wie z.B. Füllstoffe, Hilfsstoffe oder Glasperlen aufweisen. In der einen Komponente der 2-K-Systeme ist dabei eine Initiatorkomponente enthalten und in der zweiten Komponente ein Beschleuniger. Vor der Applikation werden diese beiden Komponenten miteinander vermischt und innerhalb einer Topfzeit auf der Straße bzw. dem Fußboden appliziert. Die Langlebigkeit dieser Markierungen hängt dabei jedoch von ihrer Elastizität ab. So liegt für die Anwendung in besonders heißen Gebieten hier ein Dilemma vor. Die Markierungen nach Stand der Technik werden bei Temperaturen oberhalb von 40 °C deutlich weicher und auch geringfügig klebriger. Dies führt jedoch zu einer deutlich leichteren Verschmutzung durch Anhaftung von herumfliegenden Staubpartikeln oder Sandkörnern. Wenn man die reaktionsharze dagegen härter einstellt, kann man diesem Effekt zwar entgegensteuern, dafür steigt jedoch auch die Abriebneigung der Markierung. Damit sinkt wiederum die Lebensdauer derselben.

Versiegelungen von Straßenmarkierungen sind technisch eigentlich nicht üblich, da ein mehrschichtiger Auftrag relativ aufwendig ist und eine zusätzliche Lagerhaltung bedingt. Dennoch sind für die Lösung einiger technischer Probleme auch mehrschichtige Straßenmarkierungen im Stand der Technik beschrieben.

Die meisten mehrschichtigen Systeme des Standes der Technik betreffen jedoch Markierungen, mit denen besondere optische Effekte realisiert werden sollen. So wird in WO 2010/019930 eine zusätzliche phosphoreszierende Schicht beschrieben.

In EP 0 299 744 wird eine zweite Schicht aufgetragen, um die dort eingebetteten Glasperlen besonders gut auf der Oberfläche zu verteilen. Dabei wird diese obere zweite Schicht aus Polyolefinen, Polyolefin-haltigen Terpolymeren oder aus chlorierten Polyolefinharzen gebildet. Dem Fachmann ist bekannt, dass solche Materialien einem schnellen Abrieb und einer insgesamt nur sehr kurzen Haltbarkeit unterliegen.

In JP 06010319 ist ein Reaktionsharz als Toplayer für eine auf Lösungsmittel oder einer thermoplastischen Schmelze beruhende Markierung beschrieben. Bei dem Toplayer handelt es sich dabei um ein strahlungshärtendes System, welches vor allem dazu dient Glasperlen zur Steigerung der Lichtreflektion auf die Oberfläche der Straßenmarkierung zu bringen. Eine besondere Hitzebeständigkeit oder Verschmutzungsresistenz ergibt sich mit dem System nicht. Weiterhin bestehen die Nachteile, dass die beiden Schichten nur mit großem zeitlichem Abstand aufgetragen werden können, und dass der Toplayer zusätzlich mittels gezielter Bestrahlung ausgehärtet werden muss.

Ein ganz ähnliches System mit einem klaren Topcoating zum Schutz der Glasperlen findet sich in JP 58063761. Dieses System weist die gleichen Nacheile wie das zuvor beschriebene auf.

### Aufgabe

Aufgabe der vorliegenden Erfindung ist die Bereitstellung einer Straßenmarkierungen oder Bodenbeschichtungen für den Außenbereich, die gegenüber dem Stand der Technik auch bei sehr hohen Umgebungstemperaturen, wie zum Beispiel in Wüstenregionen, eine besonders lange Haltbarkeit aufweisen und gleichzeitig über eine gegenüber dem Stand der Technik nur sehr geringe Schmutzanhaftung aufweisen.

Aufgabe der vorliegenden Erfindung ist insbesondere, dass diese Straßenmarkierungen bzw. Beschichtungen schmutzabweisende Eigenschaften, ganz besonders auch bei Umgebungstemperaturen von bis zu 50 °C, anhaltender Trockenheit und bei einem hohen Partikelanteil in der Luft, aufweisen.

Darüber hinaus soll eine solche Straßenmarkierung in einfacherweise realisierbar sein, ohne dass eine zusätzliche Härterkomponente in die schmutzabweisende Reaktionsharzversiegelung eingemischt werden muss.

Weitere nicht explizit genannte Aufgaben ergeben sich aus dem Gesamtzusammenhang der nachfolgenden Beschreibung, Ansprüche und Beispiele.

### Lösung

Gelöst wurden die gestellten Aufgaben durch die Bereitstellung einer neuartigen zweischichtigen Straßenmarkierung oder Bodenbeschichtung. Mit Straßenmarkierungen sind im Rahmen dieser Erfindung dabei sämtliche zu Markierungszwecken auf Fahrbahnen oder Gehwegen aufgebrachten Beschichtungen, die nicht nur temporär z.B. zur kurzfristigen Markierung in einem Baustellenbereich aufgebracht werden, umfasst. Dies schließt insbesondere auch Fahrradwege, Gehsteige oder Rollbahnen für den Flugverkehr mit ein. Bodenbeschichtungen betreffen dabei weitere Beschichtungen von Bodenmaterialien wie Beton, Asphalt, Estrich oder Teer, die sich insbesondere in einem Außenbereich befinden. Es sei darauf hingewiesen, dass mit dem Begriffen Straßenmarkierungen bzw. Bodenbeschichtungen, wenn nicht ausdrücklich anders erwähnt, die Beschichtungen, die bereits auf dem Untergrund appliziert sind, gemeint sind. Im weiteren wird für der Einfachhalthalber für alle diese Beschichtungen umfassend der Begriff Straßenmarkierung verwendet.

Die erfindungsgemäßen Straßenmarkierungen weisen eine untere Schicht, bei der es sich um eine ausgehärtete 2-K- Reaktionsharzformulierung auf (Meth)acrylatbasis handelt, und eine zweite obere Schicht, bei der es sich um eine ausgehärtete Reaktionsharzversiegelung handelt, auf.

Die untere, erste Schicht besteht insbesondere aus einem Material, welches vor der Aushärtung in einer oder beiden Komponenten mindestens 0,3 Gew% Vernetzer, mindestens 4 Gew% (Meth)acrylatmonomere, mindestens 2 Gew% Präpolymere und optionale weitere Zusatzstoffe enthält.

Bevorzugt weisen die beiden Komponenten des Reaktionsharzes zur Herstellung der unteren ersten Schicht zusammen folgende Inhaltsstoffe aufweisen:
0,5 Gew% bis 30 Gew%, bevorzugt 2 Gew% bis 20 Gew% und besonders bevorzugt 3 Gew% bis 15 Gew% Vernetzer, bevorzugt Di-, Tri- oder Tetra-(meth)acrylate, besonders bevorzugt Dimethacrylate,
10 Gew% bis 96,1 Gew%, bevorzugt 30 Gew% bis 80 Gew% und besonders bevorzugt 30 Gew% bis 40 Gew% (Meth)acrylate und optional mit (Meth)acrylaten copolymerisierbare Komponenten, bevorzugt (Methacrylate mit einem C₁- bis C₆-Alkylrest,
0 Gew% bis 20 Gew% Urethan(meth)acrylate,
3 Gew% bis 45 Gew%, bevorzugt 15 Gew% bis 40 Gew%, besonders bevorzugt 20 Gew% bis 35 Gew% und ganz besonders bevorzugt bis 30 Gew% Präpolymere, bevorzugt Poly(meth)acrylate und/oder Polyester, besonders bevorzugt Poly(meth)acrylate,
0,1 Gew% bis 5 Gew%, bevorzugt 0,4 bis 2 Gew%, besonders bevorzugt 0,2 bis 0,8 Gew% mindestens eines tertiären Amin, bevorzugt eines tertiären, aromatischen Amins,
0 Gew% bis 25 Gew%, bevorzugt bis 20 Gew%, besonders bevorzugt bis 15 Gew% Kern-Schale Partikel,
0,5 Gew% bis 10 Gew%, bevorzugt 1 bis 7 Gew%, besonders bevorzugt bis 5 Gew% mindestens eines Initiators, bevorzugt Dilauroylperoxid und/oder Dibenzoylperoxid
und gegebenenfalls weitere Hilfsstoffe.

Dabei liegen der oder die Initiatoren und das tertiäre Amin vor dem Vermischen in getrennten Komponenten des 2-K-Systems vor. Bezüglich des Initiators sei zu beachten, dass in die Stoffbilanz der reine Initiator eingeht. Mittel, die dem Initiator zur Stabilisierung beigefügt sind und dem Reaktionsharz entsprechend zugegeben werden, sind in der Stoffbilanz des Reaktionsharzes nicht berücksichtigt. Bei solchen Mitteln kann es sich beispielsweise um Phlegmatisierungsmittel, Öle, Lösungsmittel, Wachse oder Trägermaterialien, insbesondere anorganische Trägermaterialien handeln.
Insbesondere bevorzugt ist das Reaktionsharz zur Herstellung der ersten Schicht halogenfrei.

Bei den weiteren Hilfsstoffen kann es sich z.B. um Stabilisatoren, Inhibitoren, Regler, Weichmacher oder Wachse oder Phlegmatisierungsmittel handeln.
Bevorzugt ist das erfindungsgemäße Reaktionsharz halogenfrei.

Die erste, untere, bzw. innere Schicht kann neben mindestens 15 Gew%, insbesondere zwischen 15 bis 55 Gew% ausgehärteten Reaktionsharz 0,15 Gew% bis 25 Gew% eines anorganischen Pigments, bevorzugt Titandioxid, 0 Gew% bis 5 Gew% Stabilisatoren und/oder Additive und 20 Gew% bis 80 Gew% mineralische und/oder polymere Füllstoffe aufweisen.

Bei der zweiten oberen Schicht handelt es sich erfindungsgemäß um eine ausgehärtete Reaktionsharzversiegelung, die aus bis zu 50 Gew%, bevorzugt aus bis zu 40 Gew%, besonders bevorzugt aus bis zu 20 Gew% Pigmenten, Füllstoffen und/oder Additiven und zu mindestens 50 Gew%, bevorzugt zu mindestens 60 Gew%, besonders bevorzugt zu mindestens 80 Gew% aus einem ausgehärteten (Meth)acrylatharz, das wiederum zu mindestens 50 Gew% aus auf (Meth)acrylaten basierenden Wiederholungseinheiten und optional Polyestern besteht und eine Glasübergangstemperatur Tg von mindestens 60 °C, bevorzugt von mindestens 70 °C aufweist, besonders bevorzugt von mindestens 80 °C zusammengesetzt ist. Besonders bevorzugt ist die zweite, obere Schicht jedoch nicht pigmentiert.

Bevorzugt wird die zweite, obere Schicht der Straßenmarkierung durch Aushärten einer Reaktionsharzversiegelung erhalten, wobei diese Reaktionsharzversiegelung vor der Aushärtung mindestens folgende Komponenten enthält:
10 bis 35 Gew%, bevorzugt 15 bis 25 Gew% eines Poly(meth)acrylats und/oder eines Polyesters, bevorzugt eines Poly(meth)acrylats,
40 bis 80 Gew%, bevorzugt 60 bis 75 Gew% Monomere, bei denen es sich um (Meth)acrylate und/oder teilweise mit (Meth)acrylaten copolymerisierbare Monomere handelt, bevorzugt um (Meth)acrylate mit C₁-C₄-Alkylresten,
1 bis 10 Gew%, bevorzugt 2 bis 8 Gew% Vernetzer, bei denen es sich bevorzugt um di- und/ oder tri-(Meth)acrylate handelt,
0 bis 5 Gew%, bevorzugt 0,4 bis 4 Gew% eines tertiären, aromatischen Amins,
0 bis 25 Gew%, bevorzugt bis 10 Gew% Pigmente und/oder Füllstoffe,
0 bis 10 Gew%, bevorzugt 2 bis 8 Gew% Additive, bei denen es sich um Weichmacher, Parafine, UV-Absorber, Stabilisatoren und/oder Bläungsmittel handelt, und
0,1 bis 5 Gew%, bevorzugt 0,2 bis 4 Gew% eines oder mehrerer Initiatoren, die in der Mischung mit dem tertiären Amin erst kurz vor der Applikation zusammengebracht werden, und bei denen es sich besonders bevorzugt um Dilauroylperoxid und/oder Dibenzoylperoxid handelt.

Bezüglich der Stoffbilanz gilt für den Initiator das gleiche wie zur ersten, unteren Schicht bereits ausgeführt.

Besonders bevorzugt weisen die Poly(meth)acrylate und/oder Polyester dabei eine Glasübergangstemperatur Tg von mindestens 70 °C auf, besonders bevorzugt von mindestens 80 °C. Die Monomerkomponente wiederum besteht bevorzugt zu 50 Gew% aus solchen Monomeren, die im auspolymerisierten Zustand eine Galsübergangstemperatur von mindestens 60°C, bevorzugt von mindestens 70 °C, besonders bevorzugt von mindestens 80 °C aufweisen.

Die zweite, obere Schicht zur Versiegelung der Straßenmarkierung hat bevorzugt eine Dicke von maximal 500 µm, besonders bevorzugt von maximal 300 µm und ganz besonders bevorzugt von maximal 200 µm. Die erste, untere Schicht hat bevorzugt eine Dicke von maximal 7000 µm. Insbesondere liegt die Dicke der unteren, ersten Schicht zwischen 200 µm und 3000 µm und besonders bevorzugt zwischen 400 µm und 2000 µm. Dünnere und dickere Schichten sind ja nach Anwendung möglich. Darüber hinaus sind die mechanischen Eigenschaften der mit den erfindungsgemäßen Reaktionsharzen hergestellten Straßenmarkierung unabhängig von der Auftragsdicken der beiden Schichten ausgezeichnet.

Optional können eine der beiden Schichten oder beide Schichten direkt nach der Applikation mit einem geeigneten Nachstreumittel beaufschlagt worden sein. Geeignete Nachstreumittel sind zum Beispiel Reflexionsmittel, wie Glasperlen oder Keramikplättchen sowie Aggregate zur Einstellung von Rutschhemmung und/oder Farbeffekten, wie Bauxit, Korund, Granit, Sand oder Glasgranulat, wobei die Aggregate ggf. eingefärbt sein können.

Bevorzugt weist die zweite, obere Schicht bei 23 °C eine Bruchdehnung, gemessen nach DIN 527, gemessen an Probekörpern, die durch Polymerisation des Reaktionsharzes in einer Stahlkammer mit 4 mm Dick und anschließendem Ausfräsen der Zugstäbe hergestellt wurden, von kleiner 10 % bevorzugt kleiner 7,5 %, besonders bevorzugt kleiner 5,0 % und ganz besonders bevorzugt kleiner 2,5 % auf. Nach Aushärtung der Reaktionsharzversiegelung bei 23°C und 72h Konditionierung beträgt die Shore-D Härte gemäß DIN 53505 bei 23°C gemessen bevorzugt mindestens 60 Einheiten, besonders bevorzugt mindestens 70 Einheiten. Genauso bevorzugt hat das (Meth)acrylatharz zur Herstellung der zweiten Schicht vor der Applikation eine Viskosität bei 23 °C, gemessen nach DIN 53015, zwischen 50 und 500 mPAS, bevorzugt zwischen 50 und 250 mPAS.

Die erfindungsgemäßen Straßenmarkeirungen weist gegenüber dem Stand der Technik eine Reihe großer Vorteile auf. So weist die zweite, obere Schicht gegenüber der ersten, unteren Schicht eine gute Benetzung der Oberfläche und damit eine gute Adhäsion zu dieser auf. Dies erhöht wiederum die Lebensdauer der Straßenmarkierung. Weiterhin weist die erfindungsgemäße Straßenmarkierung eine hohe Abriebsfestigkeit, auch bei regelmäßigem Überrollen mit schweren Fahrzeugen, auf. Dies gilt insbesondere, wie verlangt, bei besonders hohen Temperaturen und in trockenen und staubigen Umgebungen. Weiterhin wird durch die neuartige obere, zweite Schicht bei Auftragung in geringer Schichtdicke von weniger als 500 µm, insbesondere von weniger als 200 µm die Sichtbarkeit der Straßenmarkierung unter gemäßigten klimatischen Bedingungen nicht wesentlich beeinträchtigt, diese aber bei Verwendung unter andauernd heißer und trockener Witterung durch Verminderung der Schmutzaufnahme erheblich verbessert.

Insbesondere wird eine porenfreie, auch bei erhöhten Temperaturen harte Markierungsstoffoberfläche durch den Einsatz der erfindungsgemäßen schmutzabweisenden Reaktionsharzversiegelung der zweiten, oberen Schicht erzielt. Diese lässt sich auf die untere, erste Schicht, welche in der Regel als eine zuvor verlegte Kaltplastikmarkierungsoberfläche vorliegt, dank niedriger Viskosität und guter Benetzung in dünner Schicht gut verteilen. Nach der Aushärtung erweicht die erfindungsgemäße zweite, obere Schicht auch bei erhöhten Umgebungstemperaturen nicht.

Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

### Spezielle Aspekte der Straßenmarkierung

Als besagte tertiäre, aromatische Amine, die als Beschleuniger im Rahmen dieser Erfindung Verwendung finden, seien zum Beispiel N,N-Dimethyl-p-toluidin, N,N-bis-(2-Hydroxyethyl)-p-toluidin oder N,N-bis-(2-Hydroxypropyl)-p-toluidin genannt.

Als Initiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide als Radikalinitiator Verwendung. Für Reaktionsharze zur Anwendung zum Beispiel für Straßenmarkierungen sind besonders bevorzugt Dilauroylperoxid oder Dibenzoylperoxid.

In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die zuvor angegebenen Konzentrationen in den erfindungsgemäß eingesetzten Reaktionsharzen beziehen sich jedoch nur auf den reinen Initiator.

In einer Alternativen Ausführungsform eines alternativen 2K- bzw. 3-K-Systems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der optionalen dritten Komponente handelt es sich wieder um die Glaskugeln und eventuell benötigte Haftvermittler.

Ein weiterer Bestandteil des erfindungsgemäßen Reaktionsharzes können die Vernetzer sein. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Poly(urethan)(meth)acrylate Tetraethylenglycol-di(meth)acrylat, Triethylenglycoldi(meth)acrylat oder Trimethylolpropantri(meth)acrylat. Der Vernetzeranteil ist gegenüber dem Stand der Technik deutlich erhöht und liegt zwischen 13 Gew% und 35 Gew%, bevorzugt zwischen minimal 20 Gew% und maximal 30 Gew%. Überraschend wurde gefunden, dass dieser relativ hohe Anteil an Vernetzer nicht nur eine hohe Anfangshärtung mit sich bringt, sondern auch in Kombination mit den anderen Komponenten eine schnelle Überrollbarkeit der Straßenmarkierung, das erfindungsgemäße Harz enthaltend, ermöglicht.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Fa. UCB Chemicals. Urethan(meth)acrylate erhöhen in einem Reaktionsharz, ohne größere Temperaturabhängigkeit, die Flexibilität, die Reißfestigkeit und die Reißdehnung. Dies hat, wie überraschend gefunden wurde, auf die Straßenmarkierung in zweierlei Hinsicht einen Einfluss: Die Temperaturstabilität der Markierung nimmt zu und, besonders überraschend, können die Nachteile eines, bedingt durch den höheren Vernetzergehalt, höheren Vernetzungsgrades bezüglich Versprödung und Haftung gegenüber der Fahrbahnoberfläche ausgeglichen werden oder sogar gegenüber Kaltplastiken gemäß dem Stand der Technik verbessert werden. Dazu ist eine für Straßenmarkierungen relativ hohe Konzentration der Urethan(meth)acrylate in dem Reaktionsharz nötig. Das erfindungsgemäße Reaktionsharz enthält daher optional zwischen 5 Gew% und 30 Gew%, bevorzugt zwischen 10 Gew% und 20 Gew% der beschriebenen Urethan(meth)acrylate.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(Imeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.
Im Einzelnen wird das Poly(meth)acrylat nach Anteil und Zusammensetzung zweckmäßigerweise im Hinblick auf die gewünschte technische Funktion gewählt werden.

In einer besonders bevorzugten Ausführungsform umfassen die Monomere ganz oder teilweise (Meth)acrylate, welche als Ester der (Meth)acrylsäure mit einem Acetal, Ketal oder Carbonat von Glycerin, substituiertem Glycerin oder Trimethylolpropan bzw. substituierten Trimethylolpropan, d. h. um Monomere der allgemeinen Strukturformeln (1) oder (2), vorliegen: 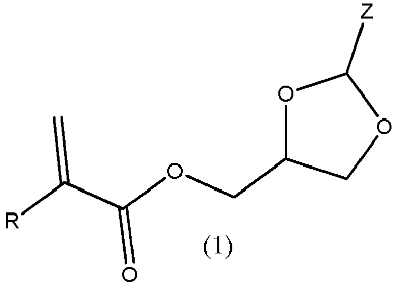
R=H, Me
R₂=H, Et
Z=H, (=O), Alkyl, Benzyl, Aryl, O-Alkyl

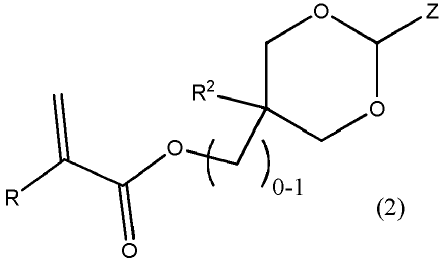

Bevorzugte Beispiele für solche Monomere sind Glycerinformal(meth)acrylat, Trimethylolpropan-formal-(meth)acrylat oder Isopropylidenglycerin(meth)acrylat (Solketal-methacrylat). Ein besonderer Vorteil dieser Monomere ist der besonders geringe Dampfdruck und damit die Geruchslosigkeit des Reaktionsharzes vor der Applikation.

Die erfindungsgemäßen Reaktionsharze können darüber hinaus optional Kern-Schale Partikel als Schlagzähmodifizierungsmittel enthalten. Die Zugabe solcher Partikel in ein Reaktionsharz kann in der internationalen Anmeldung WO 2011/072846, bzw. in der deutschen Patentanmeldung 102011003317.3 nachgelesen werden. Die Kern-Schale Partikel führen zu einer höheren mechanischen Belastbarkeit und darüber hinaus zu einer Verminderung der Rissfortpflanzung und einer höheren Verträglichkeit punktueller Belastung.

Die Kern-Schale Partikel müssen gut dispergiert in der Monomer-Polymer Mischung des Reaktionsharzes vorliegen um keine Trübungen oder Klumpenbildung zu verursachen. Dies kann durch entsprechendes Rühren oder mittels einer anderen bekannten Dispergiertechnik einfach sichergestellt werden.

Als Hilfs- und Zusatzstoffe können zusätzlich Regler, Weichmacher, Paraffine, Stabilisatoren, Inhibitoren, Wachse und/oder Öle eingesetzt werden.
Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.
Als Weichmacher werden vorzugsweise Ester, Polyole, Öle, niedermolekulare Polyether oder Phthalate eingesetzt.

Zusätzlich können den Formulierungen zur Straßenmarkierung Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.
Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid. Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Straßenmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite sowie Korund eingesetzt. Als Grobfüllstoffe werden Quarze, Cristobalite, Korunde und Aluminiumsilikate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Straßenmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

### Verfahren

Grundsätzlich ist bezüglich der Applikationstechnologie der beiden Schichten die erfindungsgemäße Straßenmarkierung flexibel einsetzbar. Die erfindungsgemäßen Reaktionsharze, bzw. Kaltplastiken können z.B. sowohl im Sprüh-, im Gieß- als auch im Extrusionsverfahren bzw. manuell mittels einer Kelle, einer Rolle oder einem Rakel aufgetragen werden.

Zusätzlich zu den beschriebenen neuartigen zweischichtigen, besonders hitzebeständigen und schmutzabweisenden Straßenmarkierungen ist auch ein gleichfalls neuartiges Verfahren zu deren Verlegung Bestandteil der vorliegenden Erfindung. Dieses Verfahren weist folgende Verfahrensschritte auf:
a) Mischen der Komponenten eines 2K-Reaktionsharzes, welches nach der Aushärtung die untere, erste Schicht bildet,
b) Applikation des Reaktionsharzes aus Verfahrensschritt a) auf der zu beschichtenden Oberfläche, wie z.B. einer Straßenoberfläche innerhalb der Topfzeit für das Reaktionsharz,
c) optionales Mischen der Komponenten, welche nach der Aushärtung die obere, zweite Schicht bilden,
d) Applikation des Reaktionsharzes zur Bildung der zweiten, oberen Schicht auf der bereits in Verfahrensschritt b)auf der Oberfläche applizierten ersten, unteren Schicht innerhalb der Topfzeit für das Reaktionsharz und
e) optionales Bestreuen, wobei Verfahrensschritt e) vor, parallel zu oder nach Verfahrensschritt d) durchgeführt werden kann. Je nach Zeitpunkt sind die Glasperlen mehr oder weniger stark in die Matrix der oberen, zweiten Schicht eingebettet.

Der Verfahrensschritt c) ist wie beschrieben optional, da nicht zwingend ein 2K-Reaktionsharz verwendet werden muss. In einer weiteren Alternative ist es zum Beispiel möglich, das Reaktionsharz zur Bildung der oberen, ersten Schicht mittels Strahlenhärtung, wobei bevorzugt entsprechende Härter dem Reaktionsharz zugesetzt sind, oder Plasmahärtung auszuhärten.

In der Variante eines 2K-Reaktionsharzes, welches mindestens einen Beschleuniger und mindestens einen Initiator aufweist wird der optionale Verfahrensschritt c) des Mischens des 2K-Systems vor, parallel zu oder nach den Verfahrensschritten a) oder b) durchgeführt. Der genaue Zeitpunkt hängt insbesondere von den jeweiligen Topfzeiten und damit den offenen Zeiten zur Applikation beider Schichten ab.

In einer besonderen Ausführungsform dieser Variante erfolgt die Aufbringung der zweiten Schicht in Verfahrensschritt d), nach Durchführung des nicht optionalen Verfahrensschritts c) und nach Aushärtung der ersten, unteren Schicht. Dabei kann insbesondere ein Nachstreumittel in mindestens eine der beiden oder in beide Schichten innerhalb der jeweiligen Topfzeit eingestreut werden.

In einer dritten Variante des Verfahrens erfolgt die Aufbringung der zweiten Schicht in Verfahrensschritt d), welche selbst keinen Initiator, jedoch bevorzugt einen Beschleuniger in Form eines der oben beschriebenen Amine enthält, und ohne Durchführung eines Mischens gemäß Verfahrensschritt c), innerhalb der Topfzeit der ersten, unteren Schicht. Dabei diffundieren Initiatoren bzw. freie Radikale aus der in der Aushärtung befindlichen ersten, unteren Schicht in die gerade applizierte zweite, obere Schicht und starten dort die Aushärtung. Diese dritte Variante ist in der Durchführung wenig aufwendig, da auf Verfahrensschritt c) verzichtet werden kann. Optional können auch bei dieser Verfahrensvariante Nachstreumittel in eine der beiden oder in beide Schichten innerhalb deren jeweiligen Topfzeit eingestreut werden.

Unabhängig von der Variante des Verfahrens wird die Verlegung der Straßenmarkierung bevorzugt maschinell, mittels eines Fahrzeugs oder einer Vorrichtung durchgeführt. Dabei erfolgt zunächst die Applikation der ersten, unteren Schicht aus einer oder mehreren Auslassvorrichtungen auf die Fahrbahn- oder sonstige Außenoberfläche gemäß Verfahrensschritt b). Anschließend, bevorzugt innerhalb der Topfzeit der ersten Schicht wird die zweite Schicht ohne Initiator mittels einer oder mehrerer Auslassvorrichtungen gemäß Verfahrensschritt d) auf die erste noch nicht ausgehärtete Schicht aufgesprüht und aus einer oder mehreren optionalen Auslassvorrichtungen die optionale Auflage von Glasperlen auf eine der beiden Schichten gemäß Verfahrensschritt e) noch innerhalb der Topfzeit der betreffenden Schicht durchgeführt. Beispielsweise sind die drei Auslassvorrichtungen dabei in Bewegungsrichtung maximal 2 m, bevorzugt maximal 1 m voneinander entfernt und werden gleichzeitig betrieben. Damit kann die Reaktionsharzversiegelung der zweiten, oberen Schicht in einfacher Weise in 1K-Verfahren, etwa durch Aufsprühen mit herkömmlichen 1 K-Farbspritzmaschinen erfolgen und die Topfzeitproblematik bei der sonst üblichen Verarbeitung in Mischung mit Härter vermieden werden. Bei den Auslassvorrichtungen kann es sich beispielsweise um Düsen handeln.

Die Topfzeit, die auch als offene Zeit bezeichnet werden kann, der 2K-Reaktionsharze hängt insbesondere von der jeweiligen Zusammensetzung des Reaktionsharzes, der Art und der Konzentration der Initiatoren bzw. Beschleuniger und von der Temperatur bei der appliziert wird, ab. Eine solche Topfzeit, die nach Stand der Technik gebräuchlich ist, liegt z.B. in der Regel zwischen 2 und 40 min. Zur sicheren Verlegung der Markierung ist z.B. ein Mischen der Komponenten in den Verfahrensschritten a) bzw. c) während des Verarbeitens in modernen Markierungsmaschinen, die über eine der Auftragsdüse vorgeschaltete Mischkammer verfügen, möglich.

Insbesondere werden die zweischichtigen, erfindungsgemäßen Straßenmarkierungen in einem Verfahren angewandt, bei dem vor, während oder direkt nach der Aufbringung der Kaltplastik auf einer Fahrbahnoberfläche Glaskugeln zugegeben werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Vorstufe 1 Erste Schicht der Straßenmarkierung

Eine 2-Komponentenkaltplastikmasse für eine herkömmliche einschichtige Straßenmarkierung wird wie folgt auf Basis eines 2-K Reaktionsharzbindemittels DEGAROUTE 465 der Firma Evonik Industries AG formuliert. Dabei enthält das Reaktionsharz zwischen 3 und 15 Gew% Vernetzer, zwischen 30 und 40 Gew% MMA, zwischen 15 und 40 Gew% n-Butylacrylat und zwischen 0,5 und 2,0 Gew% eines Gemischs zweier tertiäterer Amine:

**Tabelle 1: Kaltplastikformulierung**

| | |
|---|---|
| Reaktionsharz: | 20 Gew% DEGAROUTE 465 |
| Dispergieradditiv: | 0,1 Gew% Disperbyk 163 |
| Rheologieadditiv: | 0,1 Gew% Disperbyk D 410 |
| Rheologieadditiv: | 0,1 Gew% Bentone 27 |
| Pigment: | 10 Gew% Titandioxid |
| Feinfüllstoff: | 20 Gew% Omyacarb 15GU |
| Grobfüllstoff: | 25 Gew% Cristobalite M72 |
| Premix beads: | 25 Gew% Glasperlen (50 - 250 µm) |

Die Kaltplastikmasse wird mit 2 Gew% Härterpulver der Firma Evonik Industries AG (Benzoylperoxid 50% in Phthalat) vermischt und bei 23°C mittels eines Ziehschuhs mit 2 mm Spaltbreite auf eine Oberfläche aufgebracht, wobei die Topfzeit 10 Minuten und die Härtezeit 30 min beträgt.

Bei Verwendung dieser Straßenmarkierung insbesondere auf verkehrsreichen, asphaltierten Straßen und anhaltend trockener, heißer Witterung mit Tagestemperaturen oberhalb 35 °C verschmutzt diese herkömmliche einschichtige Straßenmarkierung stark und lässt sich durch Wasser (z.B. als Regen) nicht wieder reinigen.

### Vergleichsbeispiel 1: nicht erfindungsgemäße zweischichtige Straßenmarkierung

Zunächst wird die Kaltplastikmasse aus Vorstufe 1 wie beschrieben mit 2 Gew% Härterpulver als erste Schicht auf die Oberfläche aufgetragen. Nach Aushärtung dieser ersten Schicht, d.h. nach 30 Minuten, wird eine nicht erfindungsgemäße Reaktionsharzversiegelung in Form einer Mischung aus 4 Gew% Härterpulver und 96 Gew% reinem DEGAROUTE 465 2K-Reaktionsharz mittels einer Rolle in einer 200 µm dicken Schicht als zweite Schicht auf die ausgehärtete erste Schicht aufgetragen.

DEGAROUTE 465 ist ein 2K-Reaktionsharz mit einer dynamischen Viskosität von 200 mPas bei 23°C gemäß DIN 53018 mittels Brookfield DV-II mit Spindel 1/30 UpM gemessen, welches folgende Eigenschaften nach Aushärtung und 72h Konditionierung aufweist:

| | |
|---|---|
| Glasübergangstemperatur: | < 30°C (DIN EN ISO 11357-1) |
| Bruchdehnung: | 230% (DIN EN ISO 527 bei 23°C) |
| Zugfestigkeit: | 7 MPa (DIN EN ISO 527 bei 23°C) |

Diese nicht-erfindungsgemäße zweischichtige Straßenmarkierung verschmutzt unter den in Beispiel 1 genannten Einsatzbedingungen stark und lässt sich durch Wasser (z.B. in Form von Regen) nicht wieder reinigen.

### Beispiel 1: Erfindungsgemäße zweischichtige Straßenmarkierung und erfindungsgemäße Reaktionsharz-versiegelung

Zur Herstellung der erfindungsgemäßen Reaktionsharzversigelung wird als Polymerkomponente ein Suspensionspolymerisat verwendet, welches ausschließlich aus Methylmethacrylat (MMA) Monomereinheiten besteht und eine Molmasse von 80 000 g/mol (Mw)(ermittelt durch SEC gegen PMMA Standards), sowie eine Glasübergangstemperatur Tg von 116°C (ermittelt nach DIN EN ISO 11357-1) aufweist. Diese Polymerkomponente wurde in Methylmethacrylat gelöst, und mit den übrigen Bestandteilen gemäß folgender Zusammensetzung (siehe Tabelle 2) vermischt:

**Tabelle 2**

| | |
|---|---|
| Polymerkomponente: | 22 Gew% Suspensionspolymerisat |
| Monomerkomponente: | 63,5 Gew% Methylmethacylat |
| Vernetzer: | 5 Gew% 1,4-Butandioldimethacrylat |
| Beschleuniger: | 2 Gew% N,N-Bis-(2-hydroxypropyl)-p-toluidin |
| Weichmacher: | 5 Gew% Tributyl-O-acetylcitrat |
| Additive: | 2,5 Gew% |

Dabei weist das Gemisch, d.h. die flüssige Reaktionsharzversiegelung, bei 23°C eine dynamische Viskosität von 80 mPas (gemessen nach DIN 53018 mittels Brookfield DV-II mit Spindel 1/30 UpM) auf.

Durch Vermischen der Reaktionsharzversiegelung mit 1 Gew% Initiator (Benzoylperoxid, Härterpulver der Firma Evonik Industries AG) wird die Versiegelung bei Raumtemperatur zur Aushärtung gebracht, wobei die Topfzeit 9 Minuten und die Härtezeit 27 Minuten beträgt und die ausgehärtete Reaktionsharzversiegelung nach 72 h Konditionierung folgende Eigenschaften aufweist:

| | |
|---|---|
| Glasübergangstemperatur: | 74°C (DIN EN ISO 11357-1) |
| Bruchdehnung: | 2% (DIN EN ISO 527 bei 23°C) |
| Zugfestigkeit: | 40 MPa (DIN EN ISO 527 bei 23°C) |
| Zug-E-Modul: | 2800 MPa (DIN EN ISO 527 bei 23°C) |

Zur Herstellung der erfindungsgemäßen zweischichtigen Straßenmarkierung wird die Kaltplastikmasse aus Vorstufe 1 wie dort beschrieben mit 2 Gew% Härterpulver als erste Schicht auf die Oberfläche aufgetragen. Nach Aushärtung dieser ersten Schicht, d.h. nach 30 Minuten wird erfindungsgemäße Reaktionsharzversiegelung in Form einer Mischung aus 1 Gew% Härterpulver und 99 Gew% reinem 2K-Reaktionsharz (Zusammensetzung gemäß Tabelle 2) mittels einer Rolle in einer 150 µm dicken Schicht als zweite Schicht auf die ausgehärtete erste Schicht aufgetragen und härtet nach ca. 30 Minuten klebfrei aus.

Bei Verwendung auf verkehrsreichen, asphaltierten Straßen und anhaltend trockener, heißer Witterung mit Tagestemperaturen oberhalb 35°C verschmutzt diese erfindungsgemäße zweischichtige Straßenmarkierung gegenüber herkömmlichen einschichtigen Markierungen oder der nicht-erfindungsgemäßen zweischichtigen Markierung aus Vergleichsbeispiel 1 weniger und lässt sich durch Wasser (z.B. als Regen) besser wieder reinigen.

### Beispiel 2: Erfindungsgemäße zweischichtige Straßenmarkierung

Zur Herstellung dieser erfindungsgemäßen zweischichtigen Straßenmarkierung wird wiederum die Kaltplastikmasse aus Beispiel 1 wie dort beschrieben mit 2 Gew% Härterpulver als erste Schicht auf die Oberfläche aufgetragen. Binnen 2 Minuten nach der Applikation der ersten Schicht, d.h. vor Ablauf der Topfzeit der ersten Schicht, wird die erfindungsgemäße Reaktionsharzversiegelung gemäß Beispiel 1 ohne Zugabe von Initiatoren im airless-Spritzverfahren mit einer 1-Komponenten Spritzmaschine bei 180 bar Druck als zweite Schicht mit einer Schichtdicke von 200 µm auf die noch frische erste Schicht aufgespritzt. Die Initiierung der zweiten Schicht, die selbst keinen Initiator enthält, erfolgt dabei ausschließlich durch die darunterliegende erste Schicht. Nach 30 Minuten ist die Oberfläche der zweischichtigen Markierung klebfrei ausgehärtet.

Bei diesem Verfahren wird ausschließlich nicht-initiierte Reaktionsharzversiegelung in der Maschine vorgehalten und verarbeitet, so dass herkömmliche 1-Komponenten Spritzmaschinen genutzt werden können und die Gefahr der Polymerisation der Versiegelung im Vorratsbehälter auf der Maschine oder in der Spritzmaschine selbst vermieden wird.

Die nach diesem Applikationsverfahren hergestellte Markierung zeichnet durch geringe Schmutzaufnahme und gute Reinigungseigenschaften, wie die nach dem in Beispiel 1 genannten Applikationsverfahren hergestellte Markierung aus.

### Beispiel 3:

Eine herkömmliche 2-Komponentenkalt(spritz)plastik für die untere Schicht wird wie folgt auf Basis eines 2-K Reaktionsharzbindemittels DEGAROUTE 680 der Firma Evonik Industries AG formuliert:

**Tabelle 3 - Kaltspritzplastikformulierung**

| | |
|---|---|
| Reaktionsharz: | 35 Gew.-% DEGAROUTE 680 |
| Dispergieradditiv: | 0,5 Gew.-% Disperbyk 163 |
| Rheologieadditiv: | 0,1 Gew.-% Disperbyk D 410 |
| Pigment: | 10 Gew.-% Titandioxid |
| Feinfüllstoff: | 54,4 Gew.-% Omyacarb 15GU |

Diese Kaltplastikmasse weist bei 23 °C nach Einmischen von 2 Gew% Härterpulver eine Topfzeit von 1 min, sowie eine Härtezeit von 2,5 Minuten auf und entspricht einer Zusammensetzung der Ansprüche 6 bzw. 7.

Diese Kaltplastikmasse wird in einer airless 2K-Spritzmaschine automatisch mit 2 Gew% Flüssighärter vom Typ Benox L 40 LV der Firma United Initiators (Benzoylperoxid 40% Dispersion) vermischt und im airless-Verfahren bei 120 bar aus einer ersten Spritzdüse auf die Oberfläche als erste Schicht mit einer Dicke von 600 µm aufgespritzt, wobei die Maschine mit einer Geschwindigkeit von 7 Kilometer pro Stunde vorwärts bewegt wird. An der gleichen Spritzmaschine ist entgegen zur Fahrrichtung betrachtet im Abstand von 60 cm nach der airless-Spritzdüse eine airspray-Spritzdüse angebracht, mit welcher die erfindungsgemäße Reaktionsharzversiegelung aus Beispiel 1 ohne Zugabe von Initiator mit 3 bar Zersteuberluftdruck als zweite Schicht mit einer Dicke von 125 µm auf die frische erste Schicht aufgesprüht wird. Die Initiierung der zweiten Schicht erfolgt wiederum ausschließlich durch die darunter liegenden ersten Schicht. Die Oberfläche dieser erfindungsgemäßen Straßenmarkierung ist nach weniger als 10 Minuten klebfrei ausgehärtet.

Die erfindungsgemäße Straßenmarkierung verschmutzt insbesondere auf verkehrsreichen, asphaltierten Straßen und anhaltend trockener, heißer (Tagestemperaturen oberhalb 35°C) Witterung im Vergleich zu herkömmlichen einschichtigen Straßenmarkierung deutlich weniger und lässt sich durch Wasser (z.B. als Regen) wieder reinigen.

## Patentansprüche

1. Zweischichtige Straßenmarkierung oder Bodenbeschichtung, aufweisend eine untere Schicht, bei der es sich um eine ausgehärtete 2-K-Reaktionsharzformulierung auf (Meth)acrylatbasis, welches vor der Aushärtung in einer oder beiden Komponenten mindestens 0,3 Gew% Vernetzer, mindestens 4 Gew% (Meth)acrylatmonomere, mindestens 2 Gew% Präpolymere und optionale weitere Zusatzstoffe enthält, **dadurch gekennzeichnet, dass** es sich bei der zweiten oberen Schicht um eine ausgehärtete Reaktionsharzversiegelung, die aus bis zu 50 Gew% Pigmenten, Füllstoffen und/oder Additiven und zu mindestens 50 Gew% aus einem ausgehärteten (Meth)acrylatharz, das wiederum zu mindestens 50 Gew% aus auf (Meth)acrylaten basierenden Wiederholungseinheiten besteht und eine Glasübergangstemperatur Tg von mindestens 60 °C aufweist, zusammengesetzt ist.

2. Straßenmarkierung oder Bodenbeschichtung gemäß Anspruch 1, **dadurch gekennzeichnet, dass** die zweite Schicht mindestens 80 Gew% des ausgehärteten (Meth)acrylatharzes und maximal 20 Gew% Pigmente, Füllstoffe und/oder Additive enthält.

3. Straßenmarkierung oder Bodenbeschichtung gemäß Anspruch 1 oder 2, **dadurch gekennzeichnet, dass** das ausgehärtete (Meth)acrylatharz der zweiten Schicht eine Glasübergangstemperatur Tg von mindestens 70 °C aufweist.

4. Straßenmarkierung oder Bodenbeschichtung gemäß einem der Ansprüche 1 bis 3, **dadurch gekennzeichnet, dass** die Reaktionsharzversiegelung vor der Aushärtung zur zweiten Schicht 10 bis 35 Gew% eines Poly(meth)acrylats und/oder eines Polyesters, 40 bis 80 Gew% Monomere, bei denen es sich um (Meth)acrylate und/oder teilweise mit (Meth)acrylaten copolymerisierbare Monomere handelt, 1 bis 10 Gew% Vernetzer, 0 bis 5 Gew% eines tertiären, aromatischen Amins, 0 bis 25 Gew% Pigmenente und/oder Füllstoffe, 1 bis 10 Gew% Additive, bei denen es sich um Weichmacher, Parafine, UV-Absorber, Stabilisatoren und/oder Bläungsmittel handelt, und 0,1 bis 5 Gew% eines oder mehrerer Initiatoren, die in der Mischung mit dem tertiären Amin erst kurz vor der Applikation zusammengebracht werden, enthält, wobei die Poly(meth)acrylate und/oder Polyester eine Glasübergangstemperatur Tg von mindestens 70 °C und die Monomerkomponente zu 50 Gew% aus solchen Monomeren besteht, die im auspolymerisierten Zustand eine Galsübergangstemperatur von mindestens 60°C aufweisen.

5. Straßenmarkierung oder Bodenbeschichtung gemäß Anspruch 4, **dadurch gekennzeichnet, dass** die Reaktionsharzversiegelung vor der Aushärtung 15 bis 25 Gew% eines Poly(meth)acrylats, 60 bis 75 Gew% (Meth)acrylate mit C₁-C₄-Alkylresten, 2 bis 8 Gew% di- und/ oder tri-(Meth)acrylate, 0,4 bis 4 Gew% eines tertiären, aromatischen Amins, 0 bis 10 Gew% Pigmenente und/oder Füllstoffe, 2 bis 8 Gew% Additive und 0,2 bis 4 Gew% Dilauroylperoxid und/oder Dibenzoylperoxid enthält, wobei die Poly(meth)acrylate und die auspolymerisierten (Meth)acrylate jeweils eine Glasübergangstemperatur Tg von mindestens 70 °C aufweisen.

6. Straßenmarkierung oder Bodenbeschichtung gemäß einem der Ansprüche 1 bis 5, **dadurch gekennzeichnet, dass** die beiden Komponenten des Reaktionsharzes zur Herstellung der ersten Schicht zusammen folgende Inhaltsstoffe aufweisen: 0,5 Gew% bis 30 Gew% Vernetzer,
10 Gew% bis 96,1 Gew% (Meth)acrylate und optional mit (Meth)acrylaten copolymerisierbare Komponenten,
4 Gew% bis 20 Gew% Urethan(meth)acrylate,
3 Gew% bis 45 Gew% Präpolymere,
0,1 Gew% bis 5 Gew% mindestens ein tertiäres Amin,
1 Gew% bis 25 Gew% Kern-Schale Partikel,
0,5 Gew% bis 10 Gew% mindestens eines Initiators, wobei der oder die Initiatoren und das tertiäre Amin vor dem Vermischen in getrennten Komponenten des 2-K-Systems vorliegen, und gegebenenfalls weitere Hilfsstoffe.

7. Straßenmarkierung oder Bodenbeschichtung gemäß Anspruch 6, **dadurch gekennzeichnet, dass** die beiden Komponenten des Reaktionsharzes zur Herstellung der ersten Schicht zusammen folgende Inhaltsstoffe aufweisen: 2 Gew% bis 20 Gew% Di-, Tri- oder Tetra-(meth)acrylate,
30 Gew% bis 80 Gew% (Meth)acrylate und optional mit (Meth)acrylaten copolymerisierbare Komponenten,
0 Gew% bis 20 Gew% Urethan(meth)acrylate,
15 Gew% bis 40 Gew% Poly(meth)acrylate und/oder Polyester,
0,4 Gew% bis 2,0 Gew% mindestens ein tertiäres Amin,
0 Gew% bis 20 Gew% Kern-Schale Partikel,
1 Gew% bis 7 Gew% Initiator, wobei der Initiator und das tertiäre Amin in getrennten Komponenten des 2-K-Systems vorliegen, und gegebenenfalls weitere Hilfsstoffe.

8. Straßenmarkierung oder Bodenbeschichtung gemäß Anspruch 7, **dadurch gekennzeichnet, dass** das Reaktionsharz zur Herstellung der ersten Schicht halogenfrei ist, und dass das Reaktionsharz folgende Inhaltsstoffe aufweist: 3 Gew% bis 15 Gew% Dimethacrylate,
30 Gew% bis 40 Gew% (Meth)acrylate und optional mit (Meth)acrylaten copolymerisierbare Komponenten,
0 Gew% bis 20 Gew% Urethan(meth)acrylate,
20 Gew% bis 30 Gew% Poly(meth)acrylate,
0,2 bis 0,8 Gew% tertiäre Amine,
0 Gew% bis 15 Gew% Kern-Schale Partikel enthaltend Polymethacrylate,
1,5 Gew% bis 5 Gew% Dilauroylperoxid und/oder Dibenzoylperoxid als Initiator und gegebenenfalls weitere Hilfsstoffe.

9. Straßenmarkierung oder Bodenbeschichtung gemäß mindestens einem der Ansprüche 1 bis 8, **dadurch gekennzeichnet, dass** die erste, untere Schicht zwischen 15 bis 55 Gew% ausgehärtetes Reaktionsharz, 0,15 Gew% bis 25 Gew% eines anorganischen Pigments, bevorzugt Titandioxid, 0 Gew% bis 5 Gew% Stabilisatoren und/oder Additive und 20 Gew% bis 80 Gew% mineralische und/oder polymere Füllstoffe aufweist.

10. Straßenmarkierung oder Bodenbeschichtung gemäß mindestens einem der Ansprüche 1 bis 9, **dadurch gekennzeichnet, dass** die zweite Schicht bei 23 °C eine Bruchdehnung, gemessen nach DIN 527 kleiner 10 % aufweist, und dass das (Meth)acrylatharz zur Herstellung der zweiten Schicht vor der Applikation eine Viskosität bei 23 °C, gemessen nach DIN 53015 zwischen 50 und 500 mPAS aufweist.

11. Straßenmarkierung oder Bodenbeschichtung gemäß Anspruch 10, **dadurch gekennzeichnet, dass** die Bruchdehnung kleiner 5 % ist, und dass das die Viskosität des (Meth)acrylatharz vor der Applikation zwischen 50 und 250 mPAS liegt.

12. Straßenmarkierung oder Bodenbeschichtung gemäß mindestens einem der Ansprüche 1 bis 11, **dadurch gekennzeichnet, dass** die zweite Schicht eine Dicke von maximal 500 µm aufweist.

13. Straßenmarkierung oder Bodenbeschichtung gemäß Anspruch 12, **dadurch gekennzeichnet, dass** die zweite Schicht eine Dicke von maximal 200 µm aufweist.

14. Verfahren zur Verlegung einer besonders hitzebeständigen und schmutzabweisenden Straßenmarkierung, **dadurch gekennzeichnet, dass** dieses Verfahren folgende Verfahrensschritte aufweist: a) Mischen der Komponenten eines Reaktionsharzes gemäß einem der Ansprüche 6 bis 9, b) Applikation des Reaktionsharzes auf der Straßenoberfläche innerhalb der Topfzeit für das Reaktionsharz, c) optionales Mischen der Komponenten gemäß einem der Ansprüche 4 oder 5 zur Herstellung der zweiten Schicht, d) Applikation des Reaktionsharzes aus Verfahrensschritt c) auf der ersten Schicht innerhalb der Topfzeit für das Reaktionsharz und e) optionales Bestreuen mit Glasperlen, wobei der optionale Verfahrensschritt c) vor, parallel zu oder nach den Verfahrensschritten a) oder b) und Verfahrensschritt e) vor, parallel zu oder nach Verfahrensschritt d) durchgeführt werden kann.

15. Verfahren gemäß Anspruch 14, **dadurch gekennzeichnet, dass** die Aufbringung der zweiten Schicht in Verfahrensschritt d), nach Durchführung des nicht optionalen Verfahrensschritts c) und nach Aushärtung der ersten, unteren Schicht erfolgt, wobei optional Nachstreumittel in mindestens eine der beiden Schichten innerhalb der jeweiligen Topfzeit eingestreut werden.

16. Verfahren gemäß Anspruch 14, **dadurch gekennzeichnet, dass** die Aufbringung der zweiten Schicht in Verfahrensschritt d), welche selbst keinen Initiator enthält und ohne Durchführung des Verfahrensschritts c), innerhalb der Topfzeit der ersten, unteren Schicht erfolgt, wobei optional Nachstreumittel in mindestens eine der beiden Schichten innerhalb deren Topfzeit eingestreut werden.

17. Verfahren gemäß Anspruch 16, **dadurch gekennzeichnet, dass** die Verlegung maschinell, mittels eines Fahrzeugs oder einer Vorrichtung erfolgt, wobei zunächst die Applikation der ersten, unteren Schicht aus einer oder mehreren Auslassvorrichtungen auf die Straßen- oder sonstige Außenoberfläche gemäß Verfahrensschritt b) aufgebracht, anschließend noch innerhalb der Topfzeit der ersten Schicht die zweite Schicht ohne Initiator mittels einer oder mehrerer Auslassvorrichtungen gemäß Verfahrensschritt d) auf die erste noch nicht ausgehärtete Schicht aufgesprüht und aus einer oder mehreren optionalen Auslassvorrichtungen die optionale Auflage von Glasperlen auf eine der beiden Schichten gemäß Verfahrensschritt e) noch innerhalb der Topfzeit der betreffenden Schicht erfolgt, und wobei die drei Auslassvorrichtungen in Bewegungsrichtung maximal 2 m voneinander entfernt liegen und gleichzeitig betrieben werden.
